# EUROPEAN PATENT SPECIFICATION

(11) **EP 1 489 921 B1**
(45) Date of publication and mention of the grant of the patent: **06.01.2016**
(21) Application number: 03746361.9
(22) Date of filing: 04.04.2003
(51) Int. Cl.: A23K 1/16, A23K 1/18, A23L 1/305

(54) **USE OF LEUCINE FOR ENHANCING THE LEARNING ABILITY OF AN ANIMAL**
VERWENDUNG VON LEUCIN ZUR VERBESSERUNG DER LERNFÄHIGKEIT VON TIEREN
UTILISATION DE LA LEUCINE POUR PROMOUVOIR L'APTITUDE A L'APPRENTISSAGE DES ANIMAUX

(30) Priority: 04.04.2002 GB 0207830
(43) Date of publication of application: 29.12.2004
(73) Proprietor: Mars, Incorporated, McLean, VA 22101 (US)
(72) Inventor: FONE, Janel, Mowbray, Leicestershire LE13 1BB (GB)
(74) Representative: Cornish, Kristina Victoria Joy
(86) International application number: PCT/GB2003/001481
(87) International publication number: WO 2003/086098

(56) References cited:
- EP-A- 0 026 985
- EP-A- 1 112 693
- FR-A- 2 758 243
- US-A- 4 209 531
- US-A- 6 156 355
- US-B1- 6 245 812
- Y. Shen ET AL: "The role of neuropeptides in learning and memory: Possible mechanisms", Medical Hypotheses, vol. 45, no. 6, 1 December 1995 (1995-12-01), pages 529-538, XP055201355, ISSN: 0306-9877, DOI: 10.1016/0306-9877(95)90235-X
- Giselli Scaini ET AL: "Chronic administration of branched-chain amino acids impairs spatial memory and increases brain-derived neurotrophic factor in a rat model", Journal of Inherited Metabolic Disease, vol. 36, no. 5, 1 September 2013 (2013-09-01), pages 721-730, XP055201582, ISSN: 1573-2665, DOI: 10.1007/s10545-012-9549-z
- BIGARD A X ET AL: "Acides amines a chaine ramifiee et exercices de longue duree", REVUE FRANÇAISE DES LABORATOIRES, EDITIONS SCIENTIFIQUES ET MEDICALES ELSEVIER, vol. 1997, no. 298, 1 December 1997 (1997-12-01), pages 25-30, XP004864692, ISSN: 0338-9898, DOI: 10.1016/S0338-9898(97)80209-0
- FRETWELL L K ET AL: "THE EFFECT OF SUPPLEMENTATION WITH BRANCHED-CHAIN AMINO ACIDS ON COGNITIVE FUNCTION IN ACTIVE DOGS", THE JOURNAL OF NUTRITION, AMERICAN SOCIETY FOR NUTRITION, US, vol. 136, no. 7, SUPPL. S, 1 July 2006 (2006-07-01), pages 2069S-2071S, XP008070278, ISSN: 0022-3166

## Description

The present invention relates to the use of leucine to enhance the learning ability of animal. The present invention also relates to the use of leucine in a foodstuff or a food supplement for enhancing the learning ability of an animal.

A great deal of time, effort and cost is involved in training animals, especially dogs, to learn and perform tasks. These tasks may be for public performance purposes, for example at a circus or may relate to a working role of the animal.

Dogs are commonly selected and trained to learn commands which enable them to aid and/or assist specific members or groups of the population such as the blind or the deaf. "Service" animals, predominately dogs include all animals that provide aid for man. They include dogs trained to assist people with visual impairment and dogs trained to respond when their owner suffers a seizure ("seizure" alert dogs) as well as dogs which provide physical help, e.g. to those in a wheelchair. All require extensive training before they can take on the role of a service dog. They will need to learn commands and recognise signs and respond to these signs. Dogs for the deaf, or hearing impaired, also require extensive training. Other groups include the Police Force who use dogs to assist at the scene of a crime and Drugs squads or Customs & Excise who use dogs with an acute sense of smell to locate drugs.

All such animals tend to begin training when very young and have a relatively short working lifespan before they are retired. It is generally desirable therefore for such animals to complete their training as quickly as possible.

Aside from the role of dogs as working dogs, on a more widespread basis, there is a requirement for pets to be taught simple tasks and commands in order to become house trained, obedient and to provide pleasure to their human companions. In addition to the training of domestic pets, there is also a requirement to train companion animals, such as horses. Training of juvenile horses is both demanding and time-consuming not least when the aim is for the horses to learn complex tasks and skills such as show-jump or dressage horses.

As the time, cost and effort associated with training animals, for all the situations described above, can be extensive, it is, and has been, of considerable interest to be able to speed up the process of training. Moreover, it is desirable for all animals to demonstrate alertness throughout their lives.

Accordingly, the present invention in a first aspect, provides the use of leucine to enhance the learning ability of an animal. Enhanced learning ability can also be referred to as improved cognitive function.

The leucine is preferably in a foodstuff (diet). The foodstuff may take the form of a solid, semi-solid or liquid.

As used herein, the term "enhance the learning ability of" includes "enhanced alertness". Enhancing the alertness of an animal represents an enhancement of learning ability. Preferably, the invention provides the use of leucine to enhance the alertness of an animal.

Leucine cannot be manufactured by the body and is therefore an essential amino acid. Leucine, like isoleucine and valine, is a hydrophobic amino acid that is found as a structural element on the interior of proteins and enzymes. There appears to be no known significant metabolic role for leucine. However, as it is essential it must be provided in the diet.

The use of leucine according to the first aspect has been shown to be effective in improving the learning ability of an animal. The use of leucine has been demonstrated to provide, *inter alia,* the following:-
a. a decrease in time taken to learn a discrimination tasks and/or
b. an increase in success at learning a task and/or
c. an increase in the alertness of the animal.

The present invention relates, for all aspects, to any animal, including human. In particular the present invention relates to a companion animal such as a dog or a cat or an equine animal (eg. a horse) or other such animal for which the ability to learn skills, acquire a learned response or enhance alertness is desirable. Cats and dogs according to the present invention are preferably the domestic cat (*Felis, silvestris catus*) or the domestic dog (*Canis familiaris*) and include service dogs.

The first aspect of the invention may be used in combination with a complete and balanced food which provides all the recommended vitamins and minerals for the particular animal in question, for example, as described in National Research Council, 1985, Nutritional Requirements for Dogs, National Academy Press, Washington DC (ISBN: 0-309-03496-5); National Research Council, 1986, Nutritional Requirements for Cats, National Academy of Press, Washington DC (ISBN: 0-309-03682-8) or Association of American Feed Control Officials, Official Publication 1996.

A complete and balanced food will typically contain leucine in amounts sufficient only to satisfy the nutritional requirements of the animal in question.

The use of leucine according to the first aspect of the invention may be in a commercial pet food product. Such a product is preferably solid as a product for feeding to a pet animal, in particular a pet cat or a pet dog. The pet food product is preferably packaged. In this way, the consumer is able to identify from the packaging, the ingredients in the food product and confirm that it is suitable for the particular pet in question. The packaging may be canned, foil-wrapped, plastic-wrapped etc.

The composition can be made according to any method known in the art, such as in Waltham Book of Dog and Cat Nutrition, Ed. ATB Edney, Chapter by A.Rainbird, entitled "A Balanced Diet", pages 57 to 74, Pergamon-Press.

The use of leucine may be in a dry semi-moist or a moist product. Wet (moist) food includes food which is sold in tins and has a moisture content of 70-90%. Dry food includes food of a similar composition, but with 5-15% moisture and presented as small biscuit-like kibbles, or in a dried expanded or flaked form.

The use of leucine according to the first aspect of the invention encompasses any composition which an animal consumes in its diet. Thus, the invention covers standard food products as well as food snacks (for example snack bars, biscuits and sweet products). The composition is preferably a cooked product. It may incorporate meat or animal derived material (such as beef, chicken, turkey, lamb, pork, fish, blood plasma, marrowbone etc or one or more thereof). The product alternatively may be meat-free (preferably including a meat substitute such as soya, maize, gluten or a soya product (in order to provide a protein source). The product may contain additional protein sources such as soya protein concentrate, milk proteins, gluten etc. The product may also contain a starch source such as one or more grains (example wheat, corn, rice, oats, barley etc) or may be starch free. A typical dry dog or cat food contains about 20-30% crude protein, about 10-20% fat, the remainder being carbohydrate, including dietary fibre and ash. A typical wet or moist product contains (on a dry matter basis) about 40% fat, 50% protein and the remainder being fibre and ash.

A typical dry food for a horse contains a forage-based diet (e.g. hay), supplemented with a dry concentrated food. Hay generally consists of 10-15% protein, 60-70% fibre, 2-5% fat, the rest being carbohydrate, moisture and ash. A typical supplement consists of 10-15% protein, 4-15% fibre, 4-15% fat and 5-10% ash, the balance being carbohydrate and moisture. A horse on a maintenance diet may be fed exclusively forage, whereas a horse experiencing light work is fed around 70% of its diet as forage and 30% as feed concentrate.

The amount of leucine in a composition intended for the first aspect of the invention is any amount which enhances the learning ability of an animal. Amounts include over 0.5% by weight of leucine on an "as is" weight percent of the food. Amounts include any from 0.5% to 15%, preferably up to 10%, including: 0.5, 1.0, 1.5, 2.0, 2.5, 3.0, 3.5, 4.0, 4.5, 5.0, 5.5, 6.0, 6.5, 7.0, 7.5, 8.0, 8.5, 9.0, 9.5 and 10% (as is). These values typically apply to a composition for feeding to a dog.

The typical levels of leucine in dog and cat food tend to vary. However, average levels are (%):

| | |
|---|---|
| Dog Wet | 0.58 |
| Dog Dry | 1.84 |
| Cat Wet | 0.65 |
| Cat Dry | 4.3 |

The source of leucine for inclusion in the present invention is not limiting. Suitable sources of leucine include meat or cereal products. Typical foods containing leucine are eggs, meat, grains and pulses, e.g. eggs, fish, lentils, poultry, beef, seeds, soy, wheat, almonds, dairy products, beans and brown rice. Alternatively, the leucine may be synthetic. Preferably the leucine is the L form, namely L-leucine.

The foodstuff may be supplemented with leucine only or the foodstuff may be supplemented with leucine in combination with other amino acids. When present in combination, the leucine and other amino acids may be added to the foodstuff together or separately.

The composition of the first aspect of the invention may be administered or delivered by consumption.

Since leucine is found in protein-containing foods, it will usually be necessary to determine the concentration of each which is present in the ingredients of the composition and then add sufficient quantities to bring the total concentration of each up to the required levels according to the invention. Methods for analysing the leucine content of food are known in the art. They include a brief hot dilute acid treatment of the food, simple extraction and HPLC (high performance liquid chromatography).

In addition to the level of leucine, according to the present invention, other particular ingredients can be used. Such particular ingredients include other amino acids, for example tryptophan. Tryptophan may be included in the first aspect of the invention at a level of at least 1% over and above the level of tryptophan contained in the animal's standard diet. This level of tryptophan can be used with any combination of leucine or other amino acid in accordance with the invention.

Alternatively, the animal food supplement delivers to said animal an amount of leucine sufficient to enhance the learning ability of the animal.

The supplement may comprise at least 5%, 10%, 20% or 50% leucine on a wet weight ("as is") basis.

As used herein, the term "supplement" covers all forms of food and dietary supplements which may be solid, semi-solid or liquid. The supplement is preferably provided in a form suitable and appropriate for oral consumption.

The supplement may be provided as a concentrate with extremely high levels of leucine. In this form, the supplement may require "dilution" before feeding to the animal. The supplement may be in any form, preferably non-liquid such as a solid or semi-solid, for example a powder, granules, pellet(s), tablet(s), capsule(s), freeze dried composition etc. The supplement can be mixed in with the animal's food to the required concentration. The supplement may be leucine alone, or a combination of leucine with other components.

All the features of the first aspect of the invention apply to the second and subsequent aspects of the invention *mutadis mutandis.*

Preferably, the use according to the first aspect is by consumption of the leucine in a composition, foodstuff or supplement.

The process for the preparation of a composition for a use according to the first aspect of the invention comprises mixing together the ingredients, optionally heating to cook any raw food ingredients and optionally presenting the mixture in a form suitable for consumption. The leucine-containing ingredient may be leucine or a leucine rich component. The process may include an extrusion cooked product. The extusion cooked product may be in dried pellet form, dried expanded form or a flaked form.

The leucine level of an animal may be increased by administering to said animal an amount of leucine sufficient to increase the total leucine level of the animal. Body leucine levels can be measured by using a stable isotope of leucine and then measuring plasma levels or by taking a tissue biopsy (total body compartment dilution basis).

The present invention can be applied to an animal which, whilst being healthy and normally developed, is able to benefit from an improvement or enhancement in its ability to learn, for example, in its alertness and ability to respond to tasks, other animals, people etc. The present invention is preferably applied to an animal in need of an improvement or enhancement in its ability to learn.

To date, levels of leucine above and beyond the minimum levels sufficient to prevent a deficiency of these amino acids in animals, has not been of interest. The present invention contemplates a method, which can be applied to an animal which, whilst being healthy and normally developed, is able to benefit from an enhancement in its ability to learn.

The invention is not therapy in that it produces its effect in healthy animals with normal learning behaviour; as well as those which may be described as "slow learners". The uses can thus be described as cosmetic and non-therapeutic. The invention does not relate to the correction of learning deficiencies, rather, it provides enhancement in learning performance of healthy animals, preferably via a complete and balanced diet.

Improvements in learning ability, according to all aspects of the invention, has been exemplified by two separate studies with dogs. Study 1 involves measuring the speed of learning a discrimination test (test A) at regular intervals throughout the experimental period. Study 2 involves measuring the success at learning a task (test B) at regular intervals throughout the experimental period.

The present invention is described with reference to the Figures of which:
- Figure 1: Box and Whisker Plots of Log Transformed Data - Test A
Y axis = log₁₀(time) in seconds, X axis = Diet Codes
Diet Codes: 1 = diet O, 2 = diet L, 3= diet T, 4 = diet C, 5 = diet D
- Figure 2: Box and Whisker Plot of Log Transformed Data - Test B
Y axis = log10(time) in seconds, X axis = Diet Codes as in Fig 1)
- Figure 3: Means of performance in both Test A and Test B (Log Mean Values)

The present invention is now described with reference to the following non-limiting examples.

### Example 1

### Methods

### Apparatus for Test A

The equipment for test A consisted of three boxes joined side-by-side down the long side and open at the front. At the back of each box was a hatch with a cover that could be removed remotely to allow a food pellet to drop onto the floor of the box. Beside each hatch was a red light that could be activated to flash indicating that food was available from that hatch.

### Apparatus for Test B

The equipment for test B consisted of two boxes set side-by-side with the entrance at the back. The dogs could enter these boxes by going down the outside of the box past the red light, and turning inwards (i.e. towards the centre of the apparatus) to face the food hatch.

### Trial Set Up

Eighty dogs of various ages and types were recruited from dog training clubs. The baseline learning capability of each dog was determined in a discrimination task, as outlined in the appendices (Protocol for Test A). The result of the discrimination task allowed the dogs to be divided into two groups, "slow" and "fast" learners.

### Feeding

### Slow learners

The following dry diets were used in this study. The added amino acids were synthetically based.

Diet C (Pedigree Advance Recipe - Control Diet)

Diet T (Diet C plus 0.3% tryptophan on an "as is" basis)

Diet L (Diet C plus 0.3% leucine on an "as is" basis)

Diet O (Owners diet)

### Fast learners

Diet O (Owners diet)

Diet D (identical to Diet T)

The nutritionally balanced diets were supplied by the Waltham Centre for Pet Nutrition. The diets were manufactured from poultry meal, maize, poultry and chicken meats, rice, had an energy density of 378kcal/100g. The Pedigree Advance

Recipe (control diet) comprises the following (in approx. proportions):

| | |
|---|---|
| Protein | 26.0% |
| Fat | 16.0% |
| Ash | 7.0% |
| Leucine | 2.0% |
| Moisture | 8.0% |
| Carbohydrate | 43.0% |
| Other amino acids | 19.5% |
| (threonine, serine, glutamic acid, proline, glycine, cystine, valine, methionine, isoleucine, tyrosine, phenylalanine, histidine, lysine, alanine, in roughly equal amounts). | |

The dogs categorised as slow learners were randomly assigned to diet C, T, L or O.

Dogs categorised as fast learners were assigned to diet O or D.

Dogs remained on their assigned diet for a period of three weeks and their learning capability was then re-evaluated with another discrimination task. Note both owners and the researcher were blind to the contents of the diet.

### Testing and Evaluation

The time taken for the dogs to succeed in a second discrimination test (see Appendices, Test B), was recorded.

### Data Analysis and Presentation

Success in the discrimination task (test B) was defined as five consecutive correct discriminations. Time to success was recorded as starting when the first light was activated and ending when the dog entered the correct box, cumulated until the success criteria was reached. A record was made of both the correct and incorrect entries made by each dog, and both the total number of attempts and the proportion of correct entries was calculated (proportion correct). Statistical differences between the number of successful attempts at test A and/or B in dogs fed on the assigned diets, were assessed by one-way analysis of variance. Statistical significance was reached when P is equal to or less than 0.05.

### Results

Latency to succeed and behavioural data was collected for the 80 dogs completing the study.

### Latency to Succeed

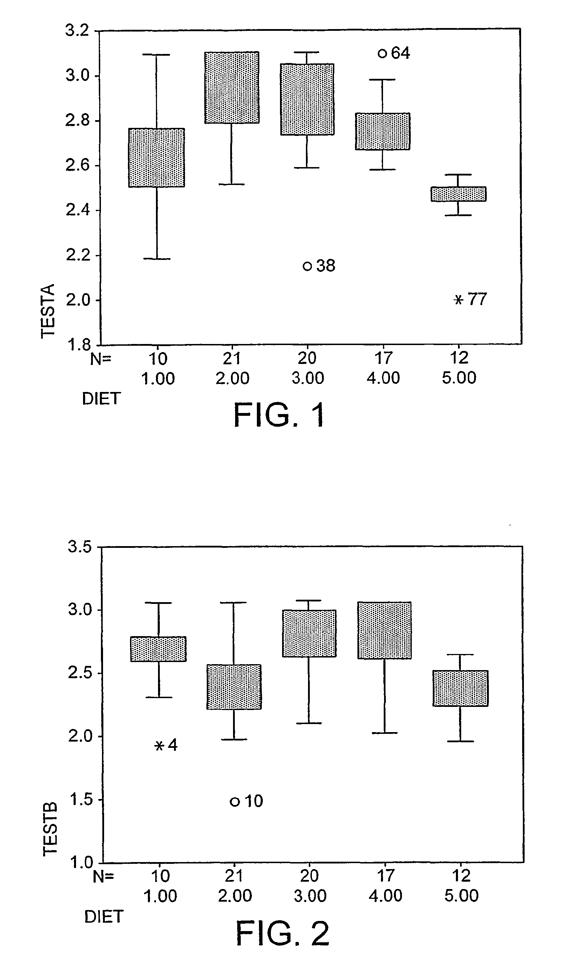

Data was therefore subjected to log transformation (Fig 1) to achieve a normal distribution and enable tests such as the t-test and ANOVA to be used; ensuring fewer Type II errors would be made during statistical analysis.

To demonstrate that the slow and fast learner groups differed significantly in their performance in Test A, their mean values were compared (^{t=9.5}df= 2.7^{p<0.001}), indicating that there was a difference in performance and a correct evaluation of each dog's learning capability had been made.

A one way ANOVA test was used to establish whether there was any between groups differences in the 4 groups of slow learners prior to being assigned any of the diets. The means were not identical, however no real difference in performance was seen, (F_{(3,61)}=11.28,p=0.29).

There was no difference (t = - 0.265,df=2.7,NS) between the 2 groups of fast learners, on the owner diet (Diet O) or Diet T, although there was a very small sample six in both groups (3 and 12 respectively).

When viewing the data for Test B, a one way ANOVA for analysis of variance showed that there was a significant difference in performance and latency to learn in Test B, between the 4 groups of slow learners, (F_{(3.61)} = 5.92,p <0.001). A Duncan's Multiple Range Test identified that this significant ANOVA result was explained by dogs on Diet L learning faster than those on the other test diets and, in fact, as the dogs assigned Diet L appeared to be slightly slower on Test A, their improvement indicates that they learned faster than any of the other groups. This is illustrated in the Box and Whisker plots of Test B (Fig. 2).

T tests of the results from Test B, showed that the performance of the slow learners assigned Diet L became as good as the fast learners, (^{t=-0.174},df=31.0 p,0.85). No significant difference was found in performance on Test B between any of the remaining slow learner groups, which were significantly slower in performance when compared to the fast learner groups.

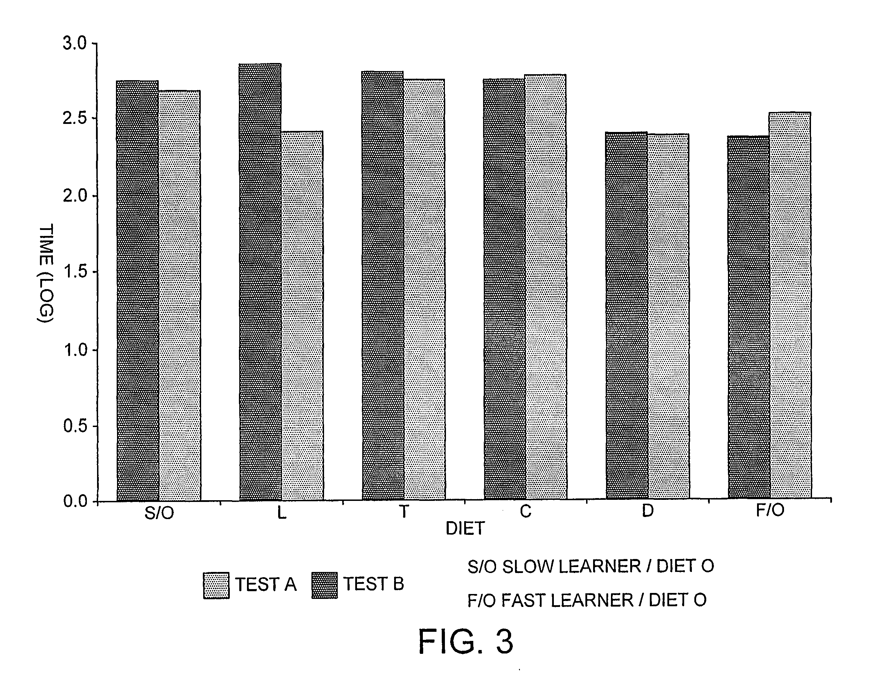

Incorporating the Test A results as a covariate within the one way ANOVA of Test B for slow learners, the Fraction increased from 5.923 to 8.0, indicating that those dogs on Diet L improved more than the Test B results suggests as they were slightly slower on Test A than the other groups; this is illustrated in Fig. 3, showing the means of performance in both Test A and Test B for all the groups of dogs.

There was a significant difference between performance of slow learner dogs on Diet T and fast learner dogs on Diet D, (t = 4.421,df=29.5, p< 0.001), although these diets were identical. No significant difference between those fast learner dogs on the owner diet and Diet D was found (t = 1.230,df = 3.4, NS). These results suggest that the faster learners were so fast there was a ceiling effect and they could not be improved.

### Behavioural Changes

Statistical analysis was not carried out on any data of behavioural changes. Increased thirst was seen in most of the test diets, but this was considered normal by the manufacturers. As expected, no changes in behaviour were seen in any dogs remaining on their existing diet.

Diet L - Any changes in behaviour were generally positive. Increased activity was thought to be positive change from the owner's point of view, indicating a more responsive dog. No difference in feeding behaviour or appetite was seen.

Diet T - There were generally less changes in behaviour, but again all were positive.

Diet C - Very little changes in behaviour.

Diet D - No major changes in behaviour were seen.

### Discussion

No significant differences were found between the four groups of slow learners before they started the trial, but a significant difference in performance was seen between the four groups on completion of test B.

The performance, in Test B, of the slow learner dogs assigned Diet L, became as good as the fast learner dogs. However, no difference in performance in Test B between any of the remaining slow learner groups was seen indicating that raised levels of leucine in the diet may influence canine learning and behaviour.

The difference in the learning performance of the dogs fed on diet L (added leucine) can be explained by these dogs learning faster than the other three groups. Moreover some owners reported an increase in activity in the dogs on diet L and this was seen to be a positive change from the owners' perspective.

### Example 2

### Trial Set Up

There are a number of variables in Example 1 which could have affected the results, for example, the temperament of the dog, the dog handler, or environmental factors. A decision was made to replicate the study in Example 1 with a further eighty dogs. The baseline learning capability of each dog was determined in a discrimination task (Test A) allowing the dogs to be divided into two groups, slow and fast learners. The slow and fast learners were randomly assigned to diet A, B, C or D. Dogs remained on their assigned diet for a period of twenty two days and their learning capability was then re-evaluated with another discrimination task (Test B). The time to successfully learn the discrimination task, the total number of discrimination attempts, and the proportion of correct responses by each dog was recorded.

### Feeding

Four dry diets were used in the study.

Diet A (Diet B plus 0.3% leucine on an "as is" basis)

Diet B (Pedigree Advance Recipe - Control Diet)

Diet C (plus 0.3% tryptophan on an "as is" basis)

Diet D (plus 0.3% isoleucine on an "as is" basis)

### Balancing of Groups Allocated to Diet A, B, C or D

| Diet | A | B | C | D |
|---|---|---|---|---|
| Male | 10 | 12 | 8 | 7 |
| Female | 10 | 8 | 11 | 14 |
| Neutered | 8 | 8 | 8 | 12 |
| Entire | 12 | 12 | 11 | 9 |
| Age (Mean) | 3.7 | 3.24 | 4.51 | 4.26 |
| Age (Median) | 3.5 | 3.0 | 4.0 | 4.5 |

There was no significant difference in the number of females and males fed each diet (χ² = 3.18, d.f. = 3, P = 0.37), or between the numbers of entire and neutered animals (χ² = 1.72, d.f. = 3, P = 0.63). The dogs assigned to diets C and D were slightly and significantly older than those assigned to diets A and B (P > 0.015). Since younger dogs may be likely to achieve success in both test A (P = 0.01) and test B (P = 0.13), this lack of balance in ages was taken into account when analysing the effects of diet on success (see below).

### Testing and Evaluation

As in Example 1.

### Relationship Between Tests A and B

More dogs were successful in test B (71%) than in test A (34%), probably because they were already familiar with the experimental, the surroundings, and the general association to be learned (flashing light equals food) on their second visit. However, there was no significant association between success in test B and in test A (χ² = 2.23, d.f. = 1, P = 0.14); five dogs that had been successful in test A were not successful in test B, despite the overall higher success rate in test B. This suggests that the two tests measured different abilities in the dogs.

### Results

| Diet | A | B | C | D |
|---|---|---|---|---|
| Success Test B | 19 | 14 | 10 | 13 |
| No Success Test B | 1 | 6 | 8 | 8 |
| Age (Median) | 3.5 | 3.0 | 4.0 | 4.5 |

Nineteen out of twenty dogs fed the diet containing leucine (diet A) succeeded in test B, which was significantly more than dogs fed the other three diets (P = 0.023).

The lower success rate of the dogs fed on diets C and D may be accounted for by their being slightly older than the dogs fed on diet A, however, this explanation is unlikely to apply to dogs fed on diet B, which were similar in age to those on diet A.

The effects of age were disregarded using a statistical analysis which measured logistic regression on success in test B. The results of this analysis confirmed that diet A was significantly different from the other three diets (P = 0.035).

### Discussion

Addition of 0.3% leucine to a control food product which normally contains a level of approximately 2% leucine, produced a measurable improvement in canine learning. Statistically significant improvements in canine learning were not demonstrated in dogs fed on a diet containing tryptophan or isoleucine.

### Appendices

### Test A

Stage 1 A food preference test was performed to ensure that the dog was sufficiently motivated by the food pellets available. The owner held different makes of food in each hand. The dog was encouraged to sniff both hands, which were then parted and the two foods placed on the ground a short distance apart. Whichever food the dog went to first was assumed to be the most palatable to that dog.
Stage 2 The dog was familiarised with the equipment and encouraged to enter the boxes to pick up food thrown in by hand. Sufficient time was allowed for the dogs to overcome any initial apprehension and the time required varied considerably from dog to dog.
Stage 3 The dog was placed approximately 1 m in front of one of the boxes and the light for that box was operated. The dog was allowed to see a food pellet drop while the light was flashing and encouraged to move forward to get it. This was repeated several times with each of the three boxes in a random order.
Stage 4 The starting point for the dog was gradually moved further away from the boxes and a light in one of the boxes was activated. The handler walked towards the light and encouraged the dog to go forward alone to get the food that was released through the hatch as the dog entered the box. The distance the handler travelled was reduced until the dog was sufficiently confident to go forward alone.
Stage 5 The dog was placed centrally, facing the boxes approximately 3 m away from them, in a position where all three lights were visible. The light in one of the boxes was activated and after being allowed time to scan the scene the dog was released to go to the box of his choice. Food was dropped only when the dog entered the box with the flashing light. These five introductory stages took, on average, 20 minutes, depending on the initial reaction of the dog to the surroundings. After a short break, when the dog was taken briefly outside, the timed test was started.
Test The test was conducted in the same way as stage 5 of the introduction with the lights being activated in a random order. Each dog was given 20 minutes of working time to solve the test. A dog was considered to have been successful if he entered the correct box five times in a row. Entering was defined as having head and shoulders inside the box. Timing started when the light was activated and the watch stopped each time that the dog successfully entered the correct box. A record was made of both the successful and the unsuccessful entries made by each dog.

### Test B

Test B was introduced in stages in a similar way to Test A. Again each dog was in the test area for up to an hour depending on the length of time that it took for the dog to complete the task.
Stage 1 The food preference test was repeated where necessary.
Stage 2 The dog was taken down the side of each box and encouraged to enter the food drop area from the rear by throwing food forward into the area.
Stage 3 The handler stood in front of one of the boxes and encouraged the dog to go down the side and into the box on its own. As its head reached the end of the entrance passage food was dropped by hand over the front panel into the area. This was repeated at random with both boxes.
Stage 4 The dog was placed centrally about 2.5 m back from the boxes and a red light was activated. The handler walked forward towards the light encouraging the dog to go forward along the side passage and into the box alone where a food pellet was dropped through the hatch as the dog's head reached the end of the entrance passage.
Stage 5 The dog was placed centrally approximately 3 m away from the equipment. A light was activated and the dog allowed time to scan the equipment. The dog was then released to make its own decision about which box to approach. If and when it entered the correct box a food pellet was dropped into the area.

These five introductory stages took, on average, 20 minutes, depending on the initial reaction of the dog to the surroundings. After a short break, when the dog was taken briefly outside, the timed test was started.
Test The test was conducted in the same way as stage 5 of the introduction, with the lights being activated in a random order. Each dog was given 20 minutes of working time to solve the test. A dog was considered to have been successful if it entered the correct box five times in a row. Entering was defined as the whole body being within the side passage. Timing started when the light was activated and the watch stopped each time that the dog entered a box whether or not it was the correct one. After each entry, correct or otherwise the test was restarted from the central point. A record was made of both the successful and the unsuccessful entries made by each dog.

## Claims

1. Use of leucine for enhancing the learning ability of an animal.

2. Use as claimed in claim 1 wherein the leucine is in a foodstuff or a food supplement.

3. Use as claimed in any one of claims 1 or 2 wherein the animal is a cat or a dog.

4. Use as claimed in claim 2 wherein the leucine is present in a composition over 2% on a wet weight basis.

5. Use as claimed in claim 2, wherein the leucine is present in a composition at 2.3% or over on a wet weight basis.

6. Use as claimed in any one of claims 1 to 5 wherein the leucine is present in a complete and balanced foodstuff.

7. Use as claimed in claim 2 wherein the food supplement comprises at least 50% leucine, on a wet weight basis.

8. Use as claimed in anyone one of claims 2 to 7, wherein the food supplement is in the form of a powder or liquid.

## Patentansprüche

1. Verwendung von Leucin zur Verbesserung der Lernfähigkeit eines Tieres.

2. Verwendung nach Anspruch 1, wobei das Leucin in einem Nahrungsmittel oder einem Nahrungsergänzungsmittel vorliegt.

3. Verwendung nach einem der Ansprüche 1 oder 2, wobei das Tier eine Katze oder ein Hund ist.

4. Verwendung nach Anspruch 2, wobei das Leucin in einer Zusammensetzung über 2% auf einer Nassgewichtbasis vorliegt.

5. Verwendung nach Anspruch 2, wobei das Leucin in einer Zusammensetzung mit 2,3% oder mehr auf einer Nassgewichtbasis vorliegt.

6. Verwendung nach einem der Ansprüche 1 bis 5, wobei das Leucin in einem vollständigen und ausgeglichenen Nahrungsmittel vorliegt.

7. Verwendung nach Anspruch 2, wobei das Nahrungsergänzungsmittel wenigstens 50% Leucin auf einer Nassgewichtbasis umfasst.

8. Verwendung nach einem der Ansprüche 2 bis 7, wobei das Nahrungsergänzungsmittel in der Form eines Pulvers oder einer Flüssigkeit ist.

## Revendications

1. Utilisation de leucine pour améliorer la capacité d'apprentissage d'un animal.

2. Utilisation selon la revendication 1, dans laquelle la leucine est contenue dans une denrée alimentaire ou dans un complément alimentaire.

3. Utilisation telle que revendiquée dans l'une quelconque des revendications 1 ou 2, dans laquelle l'animal est un chat ou un chien.

4. Utilisation selon la revendication 2, dans laquelle la leucine est présente dans la composition en une quantité supérieure à 2%, exprimés sur la base du poids à l'état humide.

5. Utilisation selon la revendication 2, dans laquelle la leucine est présente dans la composition en une quantité supérieure à 2,3% ou plus, exprimés sur la base du poids à l'état humide.

6. Utilisation telle que revendiquée dans l'une quelconque des revendications 1 à 5, dans laquelle la leucine est présente dans un aliment complet et équilibré.

7. Utilisation selon la revendication 2, dans laquelle le supplément alimentaire comprend au moins 50% de leucine, exprimés sur la base du poids à l'état humide.

8. Utilisation telle que revendiquée dans l'une quelconque des revendications 2 à 7, dans laquelle le supplément alimentaire est sous la forme d'une poudre ou d'un liquide.
